# EUROPÄISCHE PATENTANMELDUNG

(11) **EP 3 232 110 A1**
(43) Veröffentlichungstag der Anmeldung: **18.10.2017**
(21) Anmeldenummer: 17165013.8
(22) Anmeldetag: 05.04.2017
(51) Int. Cl.: F16M 7/00, A47B 91/02

(54) **STELLFUSS, INSBESONDERE FÜR HYGIENEANWENDUNGEN**

(30) Priorität: 15.04.2016 DE 102016206353
(71) Anmelder: Kipp Verpachtungen e.K., 72172 Sulz a.N. (DE)
(72) Erfinder: Leuze, Jürgen, 72172 Sulz (DE)
(74) Vertreter: Kohler Schmid Möbus Patentanwälte

(57) **Zusammenfassung**

Ein Stellfuß (10), insbesondere für Hygieneanwendungen, umfassend
- eine Lasthülse (14) mit einer durchgehenden Längsausnehmung (62) und
- eine Tragspindel (12), zum Durchragen der Lasthülse (14) in axialer Richtung,
wobei die Tragspindel (12) oberenends einen Außengewindeabschnitt (22), unterenends einen Montageabschnitt (24) und dazwischen einen gewindefreien Zylinderschaftabschnitt (32) aufweist, wobei an der Lasthülse (14) ein Dichtelement (30) zur Abdichtung der Lasthülse (14) gegen den Zylinderschaftabschnitt (32) angeordnet ist, und wobei die Lasthülse (14) in der Längsausnehmung (62) einen Innengewindeabschnitt (54) aufweist zum Zusammenwirken mit dem Außengewindeabschnitt (22) der Tragspindel (12), ist dadurch gekennzeichnet, dass eine Anschlagmechanik (58) vorgesehen ist, so dass ein Verstellbereich (64) der Lasthülse (14) derart begrenzt ist, dass das Dichtelement (30) nur auf dem Zylinderschaftabschnitt (32) verfahrbar ist. Die Erfindung gibt einen Stellfuß an, bei dem ein hygienisch sicherer Zustand stets gewährleistet ist.

## Beschreibung

Die Erfindung betrifft einen Stellfuß, insbesondere für Hygieneanwendungen, umfassend
- eine Lasthülse mit einer durchgehenden Längsausnehmung und
- eine Tragspindel, zum Durchragen der Lasthülse in axialer Richtung, wobei die Tragspindel oberenends einen Außengewindeabschnitt, unterenends einen Montageabschnitt und dazwischen einen gewindefreien Zylinderschaftabschnitt aufweist,
wobei an der Lasthülse ein Dichtelement zur Abdichtung der Lasthülse gegen den Zylinderschaftabschnitt angeordnet ist, und
wobei die Lasthülse in der Längsausnehmung einen Innengewindeabschnitt aufweist zum Zusammenwirken mit dem Außengewindeabschnitt der Tragspindel.

Eine solcher Stellfuß ist aus der Produktproschüre "Linea Teknoclean" (http://www.martinlevelling.it/PDF/hygienic_&_sanitary_feet.pdf, abgerufen am 07.04.2016) der Martin Levelling Components, Provaglio d'Iseo (Brescia), IT, bekannt geworden.

Gattungsgemäße Stellfüße werden eingesetzt, um Maschinen und Anlagen aufzustellen. Durch Drehen der Lasthülse gegen die Tragspindel können die Maschinen bzw. Anlagen ausgerichtet werden, d.h. beispielsweise in der Höhe eingestellt werden und/oder in die Horizontale gebracht bzw. gegen die Horizontale gezielt geneigt werden. Bei Maschinen und Anlagen, die in hygienisch sensiblen Bereichen eingesetzt werden, etwa bei der Lebensmittelherstellung/-verarbeitung oder in der pharmazeutischen/chemischen Industrie, müssen auch die Stellfüße entsprechende Hygieneanforderungen erfüllen. Es ist daher darauf zu achten, dass sich keine Verschmutzungen wie beispielsweise Produktrückstände ablagern können, bzw. dass allfällige Verschmutzungen leicht und gründlich entfernt werden können. Es sind daher Spalten, Toträume und andere unzugängliche Bereiche durch konstruktive Maßnahmen zu vermeiden, da sich in diesen Verschmutzungen ablagern können und von dort nur schwer wieder entfernt werden können. Insbesondere ist sicherzustellen, dass keine Verschmutzungen zwischen der Lasthülse und der Tragspindel eindringen können.

Die eingangs genannte Produktbroschüre "Linea Teknoclean" zeigt auf S. 122 einen Stellfuß mit einer Tragspindel, die auf einer Fußplatte befestigt ist. Eine Lasthülse ist über ein Innengewinde auf einem Außengewinde der Tragspindel abgestützt. Die Tragspindel und die Lasthülse weisen unterenends je eine Schlüsselfläche auf. An dem unteren Ende der Lasthülse ist ein O-Ring zwischen der Lasthülse und der Tragspindel angeordnet, wobei der O-Ring in axialer Richtung über das untere Ende der Lasthülse vorsteht. Bei dieser Bauform ist es möglich, die Lasthülse so weit nach unten zu verfahren, dass sich der O-Ring im Bereich der Schlüsselfläche der Tragspindel befindet. Dann ist jedoch die erforderliche Dichtwirkung nicht mehr gegeben. Ebenso kann die Lasthülse so weit nach oben verstellt werden, dass der O-Ring im Bereich des Außengewindes der Tragspindel zu liegen kommt. Auch dann kann der O-Ring die vorgesehene Dichtfunktion nicht erfüllen. Ferner besteht aufgrund des erforderlichen Montageablaufs die Gefahr, dass der O-Ring beim Durchschieben des Außengewindes der Tragspindel beschädigt wird.

### Aufgabe der Erfindung

Der Erfindung liegt daher die Aufgabe zugrunde, einen Stellfuß zu schaffen, bei dem ein hygienisch sicherer Zustand stets gewährleistet ist.

### Kurze Beschreibung der Erfindung

Diese Aufgabe wird gelöst durch einen Stellfuß der eingangs bezeichneten Art, der dadurch gekennzeichnet ist, dass eine Anschlagmechanik vorgesehen ist, so dass ein Verstellbereich der Lasthülse derart begrenzt ist, dass das Dichtelement nur auf dem Zylinderschaftabschnitt verfahrbar ist.

Bei einem solchen Stellfuß ist auf einfache Weise sichergestellt, dass die Lasthülse nur so eingestellt werden kann, dass das Dichtelement die Lasthülse gegen den gewindefreien Zylinderschaftabschnitt abdichten kann. Es ist stets gewährleistet, dass der Stellfuß ausschließlich innerhalb eines konstruktiv vorgesehenen Verstellbereichs verstellt und betrieben werden kann. Das Dichtelement kann so jederzeit die vorgesehene Dichtfunktion erfüllen und einen hygienisch sicheren Zustand des Stellfußes gewährleisten.

Die Anschlagmechanik bildet einerseits einen unteren Anschlag aus. Der untere Anschlag verhindert, dass die Lasthülse weiter als vorgesehen nach unten, d.h. zu dem Montageabschnitt hin, verstellt werden kann. Dadurch wird sichergestellt, dass das Dichtelement nicht nach unten über den gewindefreien Zylinderschaftabschnitt hinaus verfahren werden kann. Insbesondere kann das Dichtelement somit nicht bis auf den Montageabschnitt verfahren werden.

Der Montageabschnitt weist zumindest lokal eine nicht zylinderförmige Außenkontur auf. Insbesondere kann an dem Montageabschnitt eine erste Schlüsselfläche ausgebildet sein, typischerweise im Anschluss an den Zylinderschaftabschnitt. Über die erste Schlüsselfläche kann die Tragspindel beispielsweise mit einem Maulschlüssel, einem Zangenschlüssel oder dergleichen ergriffen werden, insbesondere um an der Tragspindel beim Verstellen der Lasthülse gegen zu halten. Vorzugsweise ist der Montageabschnitt zur Anbindung an eine Fußplatte eingerichtet.

Anderseits bildet die Anschlagmechanik einen oberen Anschlag aus. Der obere Anschlag verhindert, dass die Lasthülse weiter als vorgesehen nach oben, d.h. zu dem Außengewindeabschnitt hin, verstellt werden kann. Dadurch wird sichergestellt, dass das Dichtelement nicht nach oben über den gewindefreien Zylinderschaftabschnitt hinaus verfahren werden kann. Insbesondere kann das Dichtelement nicht bis in den Bereich des Außengewindeabschnitts verfahren werden.

Die Anschlagmechanik stellt somit sicher, dass das Dichtelement nur auf dem gewindefreien Zylinderschaftabschnitt verfahren werden kann. Dadurch ist stets die gewünschte Dichtfunktion gegeben. Weiterhin wird vermieden, dass das Dichtelement beschädigt wird, da das Dichtelement nicht mit dem Außengewindeabschnitt in Eingriff gebracht werden kann.

Bevorzugt weist die Lasthülse oberseitig eine Auflagefläche zur Abstützung einer Maschine oder Anlage auf dem Stellfuß auf. Vorzugsweise wird die Lasthülse im Bereich der Auflagefläche gegen eine aufliegende Maschine oder Anlage abgedichtet. Dazu kann eine Dichtscheibe zwischen der Auflagefläche und der Maschine oder Anlage angeordnet werden.

Typischerweise ist an der Lasthülse eine zweite Schlüsselfläche vorgesehen. Über die zweite Schlüsselfläche kann die Lasthülse beispielsweise mit einem Maulschlüssel, einem Zangenschlüssel oder dergleichen ergriffen werden, insbesondere um die Lasthülse gegen die Tragspindel zu drehen und somit eine axiale (vertikale) Position der Lasthülse einzustellen. Die zweite Schlüsselfläche ist vorteilhafterweise in einem unteren Bereich, etwa dem unteren Drittel, der Lasthülse ausgebildet.

Die Lasthülse weist eine durchgehende Längsausnehmung auf. Die Tragspindel kann die Lasthülse in axialer Richtung durchragen. Die Tragspindel wird dazu durch die Längsausnehmung der Lasthülse hindurch geführt, so dass die Tragspindel oberenends und unterenends aus der Lasthülse heraus ragt. Mithin umgreift die Lasthülse die Tragspindel.

In der Längsausnehmung der Lasthülse ist ein Innengewindeabschnitt ausgebildet, der mit dem Außengewindeabschnitt der Tragspindel zusammenwirkt. Über die Gewindeabschnitte wird die Lasthülse in axialer Richtung an der Tragspindel abgestützt. Weiter können die Tragspindel und die Lasthülse in radialer Richtung über die Gewindeabschnitte gegeneinander geführt werden. Der Innengewindeabschnitt und der Außengewindeabschnitt sind vorzugsweise als Spitzgewinde, besonders bevorzugt als metrisches ISO-Regelgewinde ausgeführt. Alternativ können der Innengewindeabschnitt und der Außengewindeabschnitt vorteilhaft als Trapezgewinde ausgeführt sein.

Das Dichtelement ist vorzugsweise unverlierbar an der Lasthülse gehalten. Beispielsweise kann in der Längsausnehmung der Lasthülse ein Dichtungssitz mit einer Nut ausgebildet sein, in die das Dichtelement eingreift. Das Dichtelement wird vorzugsweise aus einem Elastomer gefertigt.

### Bevorzugte Ausführungsformen der Erfindung

Bei einer besonders bevorzugten Ausführungsform des erfindungsgemäßen Stellfußes ist vorgesehen, dass die Längsausnehmung der Lasthülse einen mittleren Bereich aufweist, wobei ein Durchmesser des mittleren Bereichs größer ist als ein Innengewindeinnendurchmesser des Innengewindeabschnitts und als ein Innendurchmesser einer radialen Verengung, die von dem Innengewindeabschnitt axial beabstandet in der Längsausnehmung ausgebildet ist, dass die Anschlagmechanik ein Sicherungselement umfasst, dass die Tragspindel zwischen dem Zylinderschaftabschnitt und dem Außengewindeabschnitt das Sicherungselement aufweist, das in den mittleren Bereich der Längsausnehmung eingreift, wobei das Sicherungselement radial über den Innengewindeinnendurchmesser und den Innendurchmesser der Verengung hinaus aus der Tragspindel ausragt, und dass das Sicherungselement den Verstellbereich der Lasthülse derart begrenzt, dass das Dichtelement nur auf dem Zylinderschaftabschnitt verfahrbar ist.

Der mittlere Bereich wird typischerweise in axialer Richtung durch die radiale Verengung und den Innengewindeabschnitt begrenzt. Die radiale Verengung ist bevorzugt im Bereich eines Dichtungssitzes für das Dichtelement ausgebildet. Die radiale Verengung ist also typischerweise unterenends an der Lasthülse angeordnet. Entsprechend ist der Innengewindeabschnitt oberenends an der Lasthülse ausgebildet. Der mittlere Bereich erstreckt sich vorzugsweise über wenigstens die Hälfte der Länge der durchgehenden Längsausnehmung.

Die Anschlagmechanik umfasst das Sicherungselement, das dazu dient, den Verstellbereich der Lasthülse zu begrenzen. Das Sicherungselement ragt zumindest über einen Schaftaußendurchmesser des Zylinderschaftabschnitts hinaus, bevorzugt auch über einen Außengewindeaußendurchmesser des Außengewindeabschnitts hinaus. Indem das Sicherungselement radial über den Innengewindeinnendurchmesser und den Innendurchmesser der Verengung hinaus aus der Tragspindel ausragt, greift das Sicherungselement in den mittleren Bereich der Längsausnehmung ein.

Ein unterer Anschlag kann dadurch ausgebildet werden, dass beim Verfahren der Lasthülse nach unten der Innengewindeabschnitt gegen das Sicherungselement stößt. Das Sicherungselement ist derart ausgebildet, dass es nicht in den Innengewindeabschnitt eingreifen kann. Ein weiteres Verfahren der Lasthülse nach unten wird dadurch verhindert.

Ein oberer Anschlag wird dadurch realisiert, dass beim Verfahren der Lasthülse nach oben die radiale Verengung gegen das Sicherungselement stößt. Da das Sicherungselement über den Innendurchmesser der Verengung aus der Tragspindel ausragt, kann die Verengung nicht an dem Sicherungselement vorbeigeführt werden. Ein weiteres Verfahren der Lasthülse nach oben wird dadurch verhindert.

Mithin bildet das Sicherungselement sowohl den oberen als auch den unteren Anschlag zur Begrenzung des Verstellbereichs nach oben bzw. unten hin mit aus. Es können somit beide Anschläge der Anschlagmechanik mit demselben Element der Tragspindel eingerichtet werden. Indem das Sicherungselement von der Tragspindel zwischen dem Außengewindeabschnitt und dem Zylinderschaftabschnitt auskragend in den mittleren Bereich der Lasthülse eingreift und mit dem Innengewindeabschnitt und der radialen Verengung der Lasthülse zusammenwirkt, um den Verstellbereich zu begrenzen, kann eine vollständig innenliegende, verdeckte Anschlagmechanik realisiert werden. Durch die verdeckt innenliegende Anschlagmechanik wird eine besonders gute Eignung des Stellfußes für erhöhte Hygieneanforderungen erreicht.

Eine bevorzugte Ausführungsform ist dadurch gekennzeichnet, dass die Tragspindel mehrteilig mit einem Schaftteil, an dem der Zylinderschaftabschnitt ausgebildet ist, und mit einem Gewindeteil, das den Außengewindeabschnitt trägt, ausgebildet ist. Durch die Mehrteiligkeit der Tragspindel kann die Montage des Stellfußes vereinfacht werden. Insbesondere kann das Sicherungselement einfacher an der Tragspindel montiert werden. Auch wird es ermöglicht die Tragspindel erst zusammenzusetzten, nachdem das Gewindeteil und/oder das Schaftteil in zerlegtem Zustand in die Lasthülse eingeführt wurden.

In vorteilhafter Weiterbildung ist vorgesehen, dass das Gewindeteil und das Schaftteil über einen Gewindezapfen und eine Aufnahmeausnehmung mit einem Gegengewinde für den Gewindezapfen verbunden sind. Das Schaftteil und das Gewindeteil können somit miteinander verschraubt werden, wodurch auf einfache Weise eine dauerhafte und stabile Verbindung erhalten werden kann. Das Gewindeteil weist vorzugsweise eine dritte Schlüsselfläche auf, die besonders bevorzugt oberenends an dem Gewindeteil ausgebildet ist. An dem Schaftteil ist unterhalb des Zylinderschaftabschnitts typischerweise auch der Montageabschnitt (ggf. mit der ersten Schlüsselfläche) ausgebildet. Alternativ kann der Montageabschnitt auch ganz oder teilweise an einem separaten Montageteil ausgebildet sein. Der Gewindezapfen ist vorzugsweise an dem Schaftteil angeordnet, und die Aufnahmeausnehmung entsprechend an dem Gewindeteil. Alternativ zu der Verschraubung können das Schaftteil und das Gewindeteil z.B. über einen Pressverband eines axialen Zapfens in einer Bohrung verbunden werden.

In bevorzugter Weiterentwicklung ist vorgesehen, dass der Gewindezapfen einen aufgespreizten Kronenabschnitt aufweist. Durch den aufgespreizten Kronenabschnitt kann die Verschraubung mechanisch gegen Lösen gesichert werden. Insbesondere kann dadurch beim Verbinden des Schaftteils und des Gewindeteils auf Klebstoffe verzichtet werden, die mitunter nicht ausreichend beständig gegen hohe Temperaturen, Alterung und/oder aggressive Medien (beispielsweise Reinigungsmittel) sind. Beim Aufspreizen wird der Kronenabschnitt plastisch verformt.

Eine bevorzugte Fortbildungsform ist dadurch gekennzeichnet, dass die Aufnahmeausnehmung eine Hinterschneidung zum Eingreifen des aufgespreizten Kronenabschnitts aufweist. Dadurch wird die Sicherungswirkung des aufgespreizten Kronenabschnitts weiter verbessert.

Besonders bevorzugt ist ein Spreizkonus für den Kronenabschnitt vorgesehen, der durch die Montage des Gewindezapfens in der Aufnahmeausnehmung von einer Endfläche der Aufnahmeausnehmung in den Kronenabschnitt gepresst wurde, so dass dieser aufgespreizt wurde. Die Aufnahmeausnehmung kann beispielsweise in der Art eines Sackloches ausgebildet sein. Der Spreizkonus spreizt somit beim Montieren des Gewindezapfens in die Aufnahmeausnehmung den Kronenabschnitt auf. Insbesondere kann dadurch der Kronenabschnitt in die Hinterschneidung gedrückt werden. Es kann eine unlösbare Verbindung zwischen dem Gewindeteil und dem Schaftteil erhalten werden, indem der Spreikonus ein Rückverformen des Kronenabschnitts verhindert.

Eine bevorzugte Weiterbildung ist dadurch gekennzeichnet, dass zwischen dem Außengewindeabschnitt und dem Zylinderschaftabschnitt ein verjüngter Halsabschnitt an der Tragspindel ausgebildet ist, und dass das Sicherungselement eine Ausnehmung, insbesondere eine zentrale Ausnehmung, aufweist, die den Halsabschnitt umgreift. Durch Umgreifen des Halsabschnitts kann das Sicherungselement auf einfache Weise an der Tragspindel gelagert (gehalten) werden. Insbesondere kann das Sicherungselement besonders einfach und/oder kostengünstig, etwa als ein Normteil, ausgeführt werden. Die Ausnehmung kann mittig oder außermittig an dem Sicherungselement ausgebildet sein. Der Halsabschnitt trägt vorzugsweise kein Gewinde. Bei einer mehrteiligen Tragspindel ist der Halsabschnitt typischerweise im Bereich der Verbindung eines Schaftteils und eines Gewindeteils ausgebildet. Das Sicherungselement kann beispielsweise eine ringförmige Scheibe sein, bevorzugt eine keglige Federscheibe. Das Sicherungselement kann an dem Halsabschnitt beweglich gelagert sein, insbesondere in axialer Richtung. Dies ermöglicht, durch Schütteln des Stellfußes nach dessen Endmontage zu kontrollieren, ob das Sicherungselement montiert wurde, da das bewegliche Sicherungselement klappert.

Bei einer vorteilhaften Weiterbildung ist vorgesehen, dass das Sicherungselement als eine Auskragung, insbesondere als ein umlaufender Bund, an dem Gewindeteil ausgebildet ist. Dadurch kann auf ein separates Sicherungselement verzichtet werden. Dies reduziert die Anzahl der Bauteile und kann die Logistik und Montage vereinfachen. Um die Montierbarkeit einzurichten, ist die Lasthülse mehrteilig ausgeführt, typischerweise mit einem Hülsenteil und einem Gewindeeinsatz, der den Innengewindeabschnitt aufweist.

Eine bevorzugte Weiterbildung ist dadurch gekennzeichnet, dass der Zylinderschaftabschnitt und der Außengewindeabschnitt an einem gemeinsamen Bauteil ausgebildet sind, dass zwischen dem Außengewindeabschnitt und dem Zylinderschaftabschnitt ein verjüngter Halsabschnitt an der Tragspindel ausgebildet ist, und dass das Sicherungselement den Halsabschnitt zumindest abschnittsweise umgreift, insbesondere wobei das Sicherungselement im Wesentlichen C-förmig ausgebildet ist und unter elastischer Aufweitung auf den Halsabschnitt aufgeschoben wurde. Indem der Zylinderschaftabschnitt und der Außengewindeabschnitt an einem gemeinsamen Bauteil ausgebildet sind, kann eine mechanisch besonders stabile Tragspindel erhalten werden. Auch können dadurch Fertigung, Logistik und Montage vereinfacht werden. Ein im Wesentlichen C-förmiges Sicherungselement kann besonders einfach durch Aufschieben in radialer Richtung montiert werden. Das Sicherungselement wird dabei elastisch aufgeweitet und verformt sich sodann zurück, so dass es an dem Halsabschnitt gehalten wird.

Das Sicherungselement ist vorzugsweise eine Sicherungsscheibe oder ein Sicherungsring. Besonders bevorzugt ist als das Sicherungselement eine Sicherungsscheibe nach DIN 6799 vorgesehen. Ein Sicherungsring kann vorzugsweise als ein Halbmondring ausgeführt sein. Alternativ kann ein Sicherungsring beispielsweise gemäß DIN 471 oder als ein Sprengring (beispielsweise nach DIN 7993) ausgeführt sein. Das Sicherungselement umgreift den Halsabschnitt typischerweise an mehr als 50 % seines Umfangs, typischerweise um wenigstens 200°, bevorzugt um wenigstens 220°.

Anstelle eines im Wesentlichen C-förmigen Sicherungselements kann vorgesehen sein, dass das Sicherungselement eine zentrale Ausnehmung aufweist, die den Halsabschnitt vollständig oder annähernd vollständig umgreift, und dass das Sicherungselement ein Innengewinde zum Zusammenwirken mit dem Außengewindeabschnitt der Tragspindel trägt, bevorzugt wobei eine Innengewindeachse des Innengewindes gegenüber einer Normalenrichtung einer Hauptebene des Sicherungselements geneigt ausgerichtet ist.

Um die Montierbarkeit einzurichten, ist die Lasthülse mehrteilig ausgeführt, typischerweise mit einem Hülsenteil und einem Gewindeeinsatz, der den Innengewindeabschnitt aufweist.

Eine besonders bevorzugte Ausführungsform ist dadurch gekennzeichnet, dass die Lasthülse mehrteilig mit einem Hülsenteil und einem Gewindeeinsatz ausgebildet ist. Durch die Mehrteiligkeit der Lasthülse kann die Montierbarkeit des Stellfußes eingerichtet oder vereinfacht werden. Insbesondere kann das Sicherungselement in dem mittleren Bereich der Lasthülse angeordnet werden, bevor die Begrenzung des mittleren Bereichs durch den Innengewindeabschnitt in die Lasthülse eingebracht wird. Es wird mithin ermöglicht, das Sicherungselement zunächst an der Tragspindel anzuordnen und sodann in die Lasthülse einzuführen. Anschließend wird dann der Gewindeeinsatz in die Lasthülse montiert, um den mittleren Bereich zu begrenzen und um mit dem Außengewindeabschnitt der Tragspindel zusammenzuwirken. Der Gewindeeinsatz ist typischerweise in das Hülsenteil einschraubbar. Bevorzugt ist vorgesehen, dass der Gewindeeinsatz über verschiebliche Keile, die bei der Montage eingepresst werden, mit dem Hülsenteil verklemmt ist. Dadurch kann der Gewindeeinsatz zuverlässig gegen Lösen beim Verstellen der Lasthülse gesichert werden.

In einer vorteilhaften Weiterentwicklung eines erfindungsgemäßen Stellfußes mit mehrteiliger Tragspindel und an einem Halsabschnitt der Tragspindel angeordneten Sicherungselement ist vorgesehen, dass der Innengewindeabschnitt und die radiale Verengung an einem gemeinsamen Bauteil ausgebildet sind, und dass das Sicherungselement in einer Hauptebene in einer ersten Richtung eine maximale Ausdehnung aufweist, die größer ist als eine Querbreite des Sicherungselements in einer zweiten Richtung, insbesondere wobei die zweite Richtung senkrecht zu der ersten Richtung in der Hauptebene verläuft. Durch das gemeinsame Bauteil mit der Verengung und dem Innengewindeabschnitt kann der Aufbau der Lasthülse vereinfacht werden. Die Querbreite ist kleiner als ein Innengewindeinnendurchmesser des Innengewindeabschnitts und/oder als ein Innendurchmesser der Verengung der Lasthülse. Dadurch kann die Montierbarkeit eingerichtet werden. Das Sicherungselement kann entsprechend angestellt (gekippt) in die Lasthülse eingeführt werden. Sodann kann die Tragspindel unter Anordnung des Sicherungselements an dem Halsabschnitt zusammengesetzt werden. Die maximale Ausdehnung des Sicherungselements ist vorzugsweise größer als der Innengewindeinnendurchmesser und ein Innendurchmesser im Bereich der Verengung. Das Sicherungselement ist typischerweise flach ausgebildet, und weist senkrecht zu der Hauptebene eine geringe Dicke auf (z.B. weniger als 15 % der maximalen Ausdehnung).

Eine vorteilhafte Weiterbildung ist dadurch gekennzeichnet, dass das Sicherungselement ein Bolzen ist, der radial aus der Tragspindel ausragt. Sowohl die Tragspindel als auch die Lasthülse sind bevorzugt einteilig ausgeführt. Dadurch können der Aufbau des Stellfußes und die Fertigungslogistik vereinfacht werden. Der Bolzen ist typischerweise in einer Bolzenausnehmung gelagert. Die Bolzenausnehmung erstreckt sich bevorzugt zumindest näherungsweise senkrecht zu einer Längsachse der Tragspindel. Vorzugsweise kann der Bolzen federbelastet an der Tragspindel abgestützt sein. Zur Montage kann der Bolzen gegen die Federkraft eingedrückt werden; anschließend wird der Bolzen selbststätig ausgerückt.

Alternativ kann der Bolzen zum Ausrücken aus der Tragspindel über eine Axialbohrung in der Tragspindel manipuliert werden, etwa mittels eines Werkzeugs mit einem kegligen Ende, das auf einen Kegelabschnitt oder Kugelkappenabschnitt des Bolzens einwirkt. Es kann dabei ein leichter Presssitz des Bolzens in der Bolzenausnehmung vorgesehen sein. Optional kann der Bolzen über ein in der Axialbohrung verbleibendes Ausrückelement in der ausgerückten Position gesichert werden. Optional kann eingerichtet werden, dass der Bolzen über die Axialbohrung wieder zurückgezogen werden kann, um den Stellfuß demontieren zu können.

In einer bevorzugten Weiterbildung ist vorgesehen, dass die radiale Verengung in Umfangsrichtung umlaufend ausgebildet ist. Es genügt dann ein einseitiges Einragen des Sicherungselements in den mittleren Bereich der Lasthülse. Dies erhöhte die konstruktive Flexibilität. Die Verengung ist vorzugsweise in Umfangsrichtung gleichmäßig umlaufend ausgebildet, insbesondere konzentrisch zu dem Innengewindeabschnitt. Besonders bevorzugt bildet die Verengung den Dichtungssitz mit aus.

Eine bevorzugte Ausführungsform ist dadurch gekennzeichnet, dass das Dichtelement bündig und spaltfrei mit der Lasthülse abschließt und spaltfrei an dem Zylinderschaftabschnitt anliegt. Die Eignung des Stellfußes für Umgebungen mit erhöhten Hygieneanforderungen wird dadurch weiter verbessert.

In einer vorteilhaften Ausführungsform ist vorgesehen, dass der Montageabschnitt der Tragspindel mit einer Fußplatte verbunden ist, bevorzugt über ein Kugelgelenk. Über die Fußplatte kann der Stellfuß auf einem Boden abgestützt werden. Bei einer Verbindung mit dem Kugelgelenk kann der Stellfuß Winkelabweichungen, insbesondere zwischen dem Boden und einer abzustützenden Maschine oder Anlage, ausgleichen. Der Stellfuß kann unterseitig mit einem reibungserhöhenden bzw. rutschhemmenden und/oder schwingungsdämpfenden Belag versehen sein.

Bei einer besonders bevorzugten Ausführungsform ist vorgesehen, dass eine außenliegende Oberfläche der Lasthülse und eine Oberfläche des Zylinderschaftabschnitts der Tragspindel sowie eine außenliegende Oberfläche des Montageabschnitts einen Mittenrauwert Ra von höchstens 0,8 µm, bevorzugt höchstens 0,4 µm, besonders bevorzugt höchstens 0,1 µm, aufweisen. Die Eignung des Stellfußes für Umgebungen mit erhöhten Hygieneanforderungen wird dadurch weiter verbessert. Durch die besonders glatten Oberflächen wird die Schmutzanhaftung reduziert und die Reinigung wird vereinfacht. Derart kleine Mittenrauwerte lassen sich z.B. durch Schleifen oder Läppen, insbesondere Polierläppen, mit entsprechender Sorgfalt erreichen. Auch können Polierverfahren nach WO 2014/166 677 A1 verwendet werden. Gegebenenfalls kann auch eine Oberfläche der Fußplatte Mittenrauwerte Ra wie die Oberflächen des Zylinderschaftabschnitts und der Lasthülse aufweisen. Die Tragspindel, die Lasthülse und ggfs. die Fußplatte sind vorzugsweise aus nichtrostendem Edelstahl, bevorzugt gemäß FDA-Vorschrift und/oder gemäß EN 1935/2004, gefertigt, beispielsweise mit den Werkstoffnummern 1.4301, 1.4304, 1.4401, 1.4404, 1.4435 und/oder 1.4571.

In den Rahmen der vorliegenden Erfindung fällt auch ein Verfahren zur Montage eines erfindungsgemäßen Stellfußes mit mehrteiliger Lasthülse mit den Schritten:
a) Einbringen des Sicherungselements in das Hülsenteil der Lasthülse,
b) Montieren des Gewindeeinsatzes in das Hülsenteil.

Diese Vorgehensweise erlaubt es auf einfache Weise, das Sicherungselement innerhalb der Lasthülse anzuordnen. Vor dem Montieren des Gewindeeinsatzes ist die Längsausnehmung einseitig so weit eröffnet, dass das Sicherungselement eingeführt werden kann. Nach Schritt b) ist das Sicherungselement in dem mittleren Bereich der Lasthülse gefangen und kann als Teil der Anschlagmechanik wirken. Die Schritte a) und b) werden in dieser Reihenfolge durchgeführt. Sofern der Gewindeeinsatz mit verschieblichen Keilen ausgebildet ist, werden diese nach Schritt b) eingeschoben, um den Gewindeeinsatz in dem Hülsenteil zu verklemmen.

Eine bevorzugte Variante des Verfahrens betrifft die Montage eines erfindungsgemäßen Stellfußes mit verschraubter Tragspindel mit Spreizkonus-Mechanik und verjüngtem Halsabschnitt, wobei der Gewindezapfen an dem Schaftteil der Tragspindel ausgebildet ist, und wobei die Aufnahmeausnehmung an dem Gewindeteil ausgebildet ist, und ist dadurch gekennzeichnet, dass das Verfahren weiterhin die folgenden Schritte umfasst:
c) Einführen des Schaftteils der Tragspindel in das dichtungsseitige Ende der Lasthülse und Durchstecken des Gewindezapfens durch die Ausnehmung des Sicherungselements,
d) Einlegen des Spreizkonus in den noch ungespreizten Kronenabschnitt des Gewindezapfens an dem Schaftteil,
e) Einschrauben des Außengewindeabschnitts des Gewindeteils der Tragspindel in den Innengewindeabschnitt der Lasthülse,
f) Aufschrauben des Gegengewindes in der Aufnahmeausnehmung des Gewindeteils auf den Gewindezapfen des Schaftteils und Festziehen des Gewindeteils gegen das Schaftteil, so dass der Kronenabschnitt aufgespreizt wird, insbesondere in eine Hinterschneidung der Aufnahmeausnehmung.

Diese Vorgehensweise erlaubt eine einfache und zügige Montage des Stellfußes. Insbesondere kann der Gewindeeinsatz besonders einfach in der Lasthülse montiert werden, wenn die Tragspindel die Lasthülse noch nicht durchragt. Nach dem Einschieben des Schaftteils in das dichtungsseitige Ende der Lasthülse ist nur eine relativ einfache Manipulation des Sicherungselements erforderlich, um dieses auf dem Gewindezapfen anzuordnen. Optional kann im Bereich der radialen Verengung ein Anlageabschnitt für das Sicherungselement vorgesehen sein, so dass dieses beim Einschieben des Schaftteils automatisch auf dem Gewindezapfen angeordnet wird, sofern die Lasthülse währenddessen näherungsweise senkrecht ausgerichtet ist. Der Spreizkonus kann besonders einfach eingelegt werden, wenn das Schaftteil möglichst weit vorgeschoben wird. Im Weiteren ist es ohne größeren Aufwand möglich, das Gewindeteil zunächst in den Innengewindeabschnitt an dem Gewindeeinsatz einzuschrauben und sodann oder gleichzeitig das Gewindeteil auf das bereits in die Lasthülse eingeführte Schaftteil aufzuschrauben. Bevorzugt werden die Schritte c) bis e) in dieser Reihenfolge nach den Schritten a) und b) durchgeführt. Die Schritte c) und d) können alternativ auch vor den Schritten a) und/oder b) oder teilweise gleichzeitig mit diesen durchgeführt werden. Vor Schritt c), insbesondere zwischen den Schritten b) und c) oder vor Schritt a), kann das Dichtelement an der Lasthülse montiert werden. In den Schritten a) und/oder c) kann ein Hilfsstift zur Führung des Sicherungselements verwendet werden. Die Schritte e) und f) können auch gleichzeitig ausgeführt werden.

Eine vorteilhafte Verfahrensvariante zur Montage eines erfindungsgemäßen Stellfußes mit Auskragung am Gewindeteil einer mehrteiligen Tragspindel, ist dadurch gekennzeichnet, dass vor Schritt b) das Schaftteil in das dichtungsseitige Ende der Lasthülse eingeführt wird und das Gewindeteil mit dem Schaftteil verbunden wird. Solange der Gewindeeinsatz nicht in der Lasthülse montiert ist, können das Schaftteil und das Gewindeteil der Tragspindel besonders einfach miteinander verbunden werden. Sodann kann der Gewindeeinsatz zunächst auf den Außengewindeabschnitt aufgeschraubt und anschließend, geführt durch den Außengewindeabschnitt, in das Hülsenteil montiert werden. Alternativ kann der Gewindeeinsatz gleichzeitig auf den Außengewindeabschnitt der Tragspindel aufgeschraubt und in das Hülsenteil montiert werden. Bevorzugt wird der Gewindeeinsatz zur Montage in das Hülsenteil eingeschraubt.

Eine vorteilhafte Verfahrensvariante zur Montage eines erfindungsgemäßen Stellfußes mit zwischen dem Außengewindeabschnitt und dem Zylinderschaftabschnitt ungeteilter Tragspindel, ist dadurch gekennzeichnet,
α) dass vor Schritt a) ein Einführen der Tragspindel in das dichtungsseitige Ende der Lasthülse erfolgt,
β) dass vor Schritt a) das Sicherungselement an dem Halsabschnitt angeordnet wird, und
γ) dass vor oder während Schritt b) ein Aufschrauben des Gewindeeinsatzes auf den Außengewindeabschnitt der Tragspindel erfolgt.

Beim Einführen der Tragspindel in die Lasthülse in Schritt α) ist das Sicherungselement noch nicht an der Tragspindel angeordnet. In Schritt α) wird die Tragspindel so weit vorgeschoben, dass sich der Halsabschnitt außerhalb der Lasthülse befindet. Dadurch kann das Sicherungselement auf einfache Weise in Schritt β) an dem Halsabschnitt angeordnet und sodann in Schritt a) in das Hülsenteil eingebracht werden. Anschließend kann in den Schritten γ) und b) der Gewindeeinsatz auf den Außengewindeabschnitt aufgeschraubt und in das Hülsenteil montiert werden.

Ein vorteilhaftes Verfahren zur Montage eines erfindungsgemäßen Stellfußes mit mehrteiliger Tragspindel und mit einem gemeinsamen Bauteil, das den Innengewindeabschnitt und die radiale Verengung der Lasthülse aufweist, umfasst die Schritte:
a') Einbringen des Sicherungselements in den mittleren Bereich der Lasthülse, insbesondere wobei das Sicherungselement beim Passieren der radialen Verengung oder des Innengewindeabschnitts verkippt wird,
b') Anordnen des Sicherungselements an dem Halsabschnitt und Verbinden des Gewindeteils mit dem Schaftteil.

Erfindungsgemäß wird zunächst das Sicherungselement in die Lasthülse eingebracht. Dazu wird in Schritt a') das Sicherungselement zum Durchführen durch den Innengewindeabschnitt oder die Verengung bevorzugt derart ausgerichtet, dass die erste Richtung näherungsweise parallel zu der axialen Richtung orientiert ist. Insbesondere kann dabei die zweite Richtung, die durch die Querbreite definiert ist, orthogonal zu der axialen Richtung der Lasthülse ausgerichtet werden. In Schritt b') kann sodann das Sicherungselement an dem Halsabschnitt der Tragspindel angeordnet und das Schaftteil mit dem Gewindeteil verbunden werden. Dazu wird vorzugsweise zunächst nur das Schaftteil in die Lasthülse eingeführt, insbesondere wenn das Schaftteil einen Gewindezapfen zur Verbindung mit dem Gewindeteil trägt. Das Sicherungselement kann sodann relativ zu dem Schaftteil positioniert werden, wobei die erste Richtung der maximalen Breite des Sicherungselements orthogonal zu der axialen Richtung ausgerichtet wird. Sodann kann das Gewindeteil in die Lasthülse eingeschraubt und unter Einschließen des Sicherungselements an dem Halsabschnitt mit dem Schaftteil verbunden werden. Das Sicherungselement ist somit an dem Halsabschnitt gehalten und derart ausgerichtet, das es den Verstellbereich begrenzt.

Ein vorteilhaftes Verfahren zur Montage eines erfindungsgemäßen Stellfußes mit einem radial ausragenden Bolzen als Sicherungselement umfasst die Schritte:
a") Einrücken des Bolzens in eine Bolzenausnehmung der Tragspindel,
b") Einbringen des Bolzens in die Lasthülse durch Vorschieben der Tragspindel,
c") Ausrücken des Bolzens, so dass dieser radial aus der Tragspindel ausragt und in den mittleren Bereich der Lasthülse eingreift.

Mit dieser Vorgehensweise ist es auf einfache Weise möglich, den Bolzen als das Sicherungselement innerhalb der Lasthülse anzuordnen und in Eingriff mit dem mittleren Bereich zu bringen. Ein Zusammensetzen der Tragspindel und der Lasthülse während der Montage kann erfindungsgemäß vermieden werden. Vor Schritt a") kann die Tragspindel bereits teilweise in die Lasthülse eingeführt werden, insbesondere mit dem Außengewindeabschnitt in das dichtungsseitige Ende der Lasthülse. In Schritt a") wird der Bolzen zumindest so weit in die Tragspindel eingerückt, dass er an der radialen Verengung oder dem Innengewindeabschnitt der Lasthülse vorbeigeführt werden kann. Der Bolzen kann dabei noch geringfügig aus der Tragspindel herausragen. Bevorzugt wird der Bolzen so weit eingerückt, dass er nicht aus der Tragspindel herausragt. Wenn der Bolzen federbelastet in der Tragspindel gelagert ist, wird der Bolzen solange zurückgehalten bis er in Schritt b") in die radiale Verengung oder den Innengewindeabschnitt der Lasthülse passiert hat. Typischerweise erfolgt während Schritt b") auch ein Aufschrauben des Innengewindeabschnitts der Lasthülse auf den Außengewindeabschnitt der Tragspindel. Bei einem federbelasteten Bolzen erfolgt Schritt c") selbsttätig nachdem der Bolzen die radiale Verengung oder den Innengewindeabschnitt der Lasthülse passiert hat. Alternativ kann der Bolzen in Schritt c") aktiv manipuliert werden, etwa mittels eines Werkzeugs mit einem kegligen Ende, das durch eine Axialbohrung der Tragspindel geführt wird, und das auf einen Kegelabschnitt oder Kugelkappenabschnitt des Bolzens einwirkt.

Weitere Vorteile der Erfindung ergeben sich aus der Beschreibung und der Zeichnung. Die vorstehend genannten und die noch weiter ausgeführten Merkmale können erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine schematische Seitenansicht einer ersten Ausführungsform eines erfindungsgemäßen Stellfußes;
- Fig. 1b: den Stellfuß von Fig. 1a in einer schematischen, perspektivischen Ansicht;
- Fig. 1c: eine schematische Schnittdarstellung des Stellfußes von Fig. 1a, wobei eine Tragspindel und eine Lasthülse des Stellfußes jeweils mehrteilig ausgeführt sind und eine innenliegende Anschlagmechanik eingerichtet ist;
- Fig. 1d: einen vergrößerten Ausschnitt von Fig. 1c (siehe Markierung Id) im Bereich einer Verschraubung eines Gewindeteils und eines Schaftteils einer Tragspindel des Stellfußes;
- Fig. 2a: eine schematische Schnittdarstellung einer zweiten Ausführungsform eines erfindungsgemäßen Stellfußes mit ungeteilter Tragspindel und einem auf die Tragspindel aufsteckbaren Sicherungselement in einem teilmontierten Zustand;
- Fig. 2b: eine schematische, perspektivische Darstellung des teilmontierten Stellfußes von Fig. 2a;
- Fig. 2c: den Stellfuß von Fig. 2a mit montiertem Sicherungselement in einer schematischen Schnittdarstellung;
- Fig. 2d: den Stellfuß von Fig. 2a im fertig montierten Zustand in einer schematischen Schnittdarstellung;
- Fig. 3a: eine schematische Schnittdarstellung einer dritten Ausführungsform eines erfindungsgemäßen Stellfußes mit einer mehrteiligen Tragspindel und einer ungeteilten Lasthülse in einem teilmontierten Zustand;
- Fig. 3b: den Stellfuß von Fig. 3a im fertig montierten Zustand in einer schematischen Schnittdarstellung;
- Fig. 4: eine schematische Schnittdarstellung einer vierten Ausführungsform eines erfindungsgemäßen Stellfußes mit einem umlaufenden Bund als einem Sicherungselement an einem Gewindeteil einer Tragspindel;
- Fig. 5: eine schematische Schnittdarstellung einer fünften Ausführungsform eines erfindungsgemäßen Stellfußes mit einer auf eine Tragspindel aufgeschraubten Anschlagkappe;
- Fig. 6a: eine sechste Ausführungsform eines erfindungsgemäßen Stellfußes mit einem aus einer Tragspindel ausragenden Bolzen als Sicherungselement in einer schematischen Schnittdarstellung;
- Fig. 6b: einen vergrößerten Ausschnitt des Stellfußes von Fig. 4a im Bereich des Bolzens.

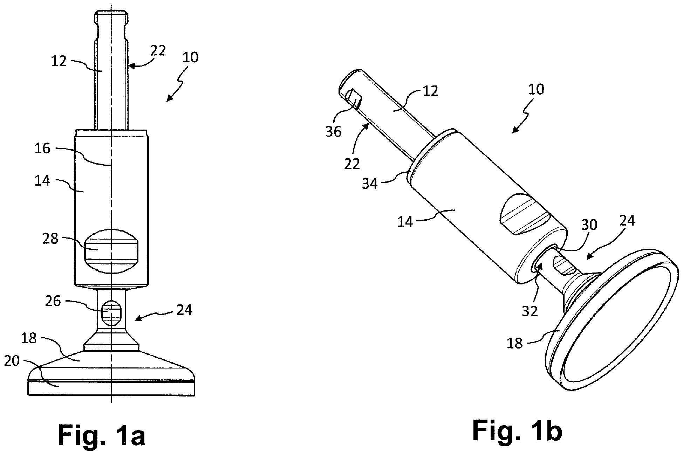

Figur 1a zeigt eine schematische Seitenansicht einer ersten Ausführungsform eines erfindungsgemäßen Stellfußes 10. Der Stellfuß 10 umfasst eine Tragspindel 12 und eine Lasthülse 14. Die Tragspindel 12 durchragt die Lasthülse 14 in einer axialen Richtung **16**. Die Tragspindel 12 ist hier auf eine Fußplatte **18** montiert. Die Fußplatte 18 weist unterseitig einen Belag 20 auf, der insbesondere aus Kunststoff rutschhemmend und/oder schwingungsdämpfend ausgebildet sein kann, und der zur Abdichtung der Fußplatte 18 gegen einen Boden (nicht dargestellt), auf dem der Stellfuß 10 aufgestellt ist, dient.

Die Tragspindel 12 weist oberenends einen Außengewindeabschnitt **22** auf. Ein Innengewindeabschnitt (verdeckt) der Lasthülse 14 wirkt mit dem Außengewindeabschnitt 22 zusammen, um die Lasthülse 14 gegen die Tragspindel 12 abzustützen und in der Höhe (vertikalen Position an der Tragspindel 12) verstellen zu können.

Die Tragspindel 12 ist unterenends mit einem Montageabschnitt **24** ausgebildet. Der Montageabschnitt 24 weist lokal eine nicht zylinderförmige Außenkontur auf. Insbesondere ist an dem Montageabschnitt eine erste Schlüsselfläche **26** ausgebildet. Der Montageabschnitt 24 dient weiterhin zur Anbindung der Tragspindel 12 an die Fußplatte 18. Hier weitet sich der Montageabschnitt 24 zur Fußplatte 18 hin radial auf. Alternativ kann zwischen dem Montageabschnitt 24 und der Fußplatte 18 ein Kugelgelenk (nicht dargestellt) ausgebildet sein.

Die Lasthülse 14 weist eine zweite Schlüsselfläche **28** auf, die hier unterenends an der Lasthülse 14 ausgebildet ist. Über die zweite Schlüsselfläche 28 kann die Lasthülse 14 gegen die Tragspindel 12 verdreht werden, insbesondere unter Gegenhalten an der ersten Schlüsselfläche 26 der Tragspindel 12, um eine Position der Lasthülse 14 in der axialen Richtung 16, d.h. in Gebrauchsstellung des Stellfußes 10 in vertikaler Richtung, einzustellen.

In **Figur 1b** ist der Stellfuß 10 von Fig. 1a in einer schematischen, perspektivischen Ansicht dargestellt. Unterenends ist ein Dichtelement **30** an der Lasthülse 14 angeordnet. Das Dichtelement 30 dient zur Abdichtung der Lasthülse 14 gegen einen gewindefreien Zylinderschaftabschnitt **32** der Tragspindel 12. Das Dichtelement 30 schließt bündig und spaltfrei mit der Lasthülse 14 ab. Ferner liegt das Dichtelement 30 spaltfrei an der Tragspindel 12 an.

Oberenends ist eine erste Dichtscheibe **34** des Stellfußes 10 auf die Lasthülse 14 aufgelegt. Die Dichtscheibe 34 dient zur Abdichtung des Stellfußes 10 gegen eine abzustützende Maschine oder Anlage (nicht dargestellt). Die erste Dichtscheibe 34 kann eine radial innen liegende Tragscheibe (verdeckt) und einen radial außen liegenden umlaufenden Dichtkörper aus einem Elastomer aufweisen, wobei der Dichtkörper im entspannten Zustand einen im Wesentlichen trapezförmigen Querschnitt aufweist, der sich nach radial außen hin in Achsrichtung aufweitet, und der zumindest an seinem radial äußeren Ende dicker ist als die Tragscheibe.

Die Tragspindel 12 weist hier oberenends im Bereich des Außengewindeabschnitts 22 eine dritte Schlüsselfläche **36** auf. Die dritte Schlüsselfläche 36 kann insbesondere bei der Montage der Tragspindel 12 verwendet werden.

Die Tragspindel 12, die Lasthülse 14 und die Fußplatte 18 sind hier aus einem austenitischen Edelstahl gefertigt. Außenliegende Oberflächen der Lasthülse 14, der Fußplatte 18 und des Montageabschnitts 24 sowie eine Oberfläche des Zylinderschaftabschnitts 32 weisen hier jeweils einen Mittenrauwert Ra von weniger als 0,2 µm auf.

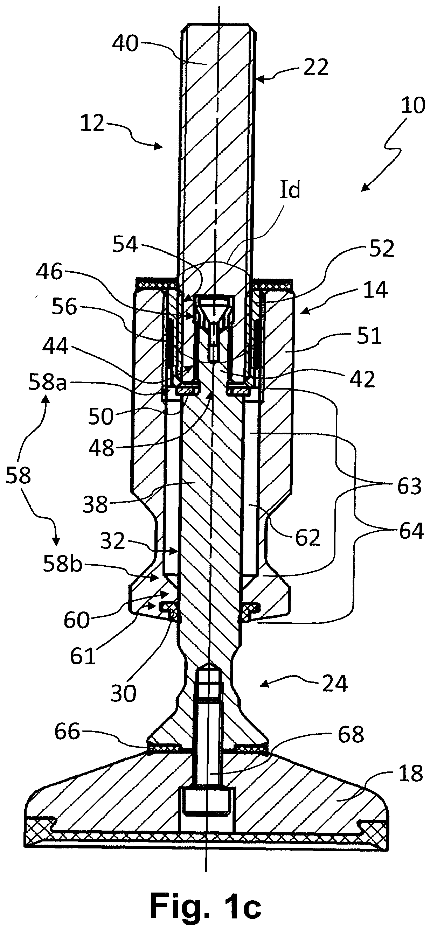

**Figur 1c** zeigt eine schematische Schnittdarstellung des Stellfußes 10 von Fig. 1a. Die Tragspindel 12 ist mehrteilig mit einem Schaftteil **38** und einem Gewindeteil **40** ausgeführt. Das Schaftteil 38 weist den gewindefreien Zylinderschaftabschnitt 32 und den Montageabschnitt 24 auf. An dem Gewindeteil 40 ist der Außengewindeabschnitt 22 ausgebildet.

Das Gewindeteil 40 und das Schaftteil 38 sind miteinander verschraubt. An dem Schaftteil 38 ist ein Gewindezapfen **42** ausgebildet, der in ein Gegengewinde **44** in einer Aufnahmeausnehmung **46** des Gewindeteils 40 eingeschraubt ist. Zwischen dem Schaftteil 38 und dem Gewindeteil 40 bildet der Gewindezapfen 42 einen verjüngten Halsabschnitt **48** aus. An dem Halsabschnitt 48 ist ein Sicherungselement **50** gelagert. Das Sicherungselement 50 ist hier als eine ringförmige Scheibe ausgebildet, die den Halsabschnitt 48 umgreift.

In ein Hülsenteil **51** der Lasthülse 14 ist ein Gewindeeinsatz **52** eingeschraubt. Die Lasthülse 14 ist mithin mehrteilig ausgebildet. Der Gewindeeinsatz 52 trägt einen Innengewindeabschnitt **54**, der mit dem Außengewindeabschnitt 22 zusammenwirkt. Der Gewindeeinsatz 52 ist über eingepresste Keile **56** in dem Hülsenteil 51 unlösbar verklemmt.

Das Sicherungselement 50 kann nicht in den Innengewindeabschnitt 54 eingeschraubt werden. Insbesondere trägt das Sicherungselement 50 außenumfangseitig kein Gewinde. Das Sicherungselement 50 und eine Unterseite des Gewindeeinsatzes 52 bilden somit einen unteren Anschlag **58a** einer Anschlagmechanik **58** aus. In der gezeigten Stellung ist die Lasthülse 14 bis an den unteren Anschlag 58a verfahren.

Unterenends weist die Lasthülse 14 eine radiale Verengung **60** auf. Die radiale Verengung 60 ist hier in Umfangsrichtung gleichmäßig umlaufend ausgeführt. Die radiale Verengung 60 bildet einen Dichtungssitz **61** für das Dichtelement 30 mit aus. Der Dichtungssitz 61 umfasst hier eine Nut, in die das Dichtelement 30 eingreift, so dass es sicher an der Lasthülse 14 gehalten ist. Die radiale Verengung 60 wirkt zusammen mit dem Sicherungselement 50 als ein oberer Anschlag **58b** der Anschlagmechanik 58.

Zwischen dem Gewindeeinsatz 52 und der radialen Verengung 60 weist eine durchgehende Längsausnehmung **62** der Lasthülse 14 somit einen mittleren Bereich **63** auf, in den das Sicherungselement 50 eingreift. Durch das Eingreifen des Sicherungselements 50 in den mittleren Bereich 63 wird die Anschlagmechanik 58 realisiert.

Durch den unteren Anschlag 58a und den oberen Anschlag 58b der Anschlagmechanik 58 wird ein Verstellbereich **64** der Lasthülse 14 (hier bezogen auf die Unterkante des Dichtelements 30) derart begrenzt, dass das Dichtelement 30 nur auf dem Zylinderschaftabschnitt 32 der Tragspindel 12 verfahrbar ist. Insbesondere kann das Dichtelement 30 nicht bis in den Bereich des Montageabschnitts 24 abgesenkt werden. Auch kann das Dichtelement 30 nicht bis auf den Außengewindeabschnitt 22 nach oben verfahren werden. Die Anschlagmechanik 58 ist hier komplett innerhalb der Lasthülse 14 angeordnet.

Zwischen der Tragspindel 12 und der Fußplatte 18 ist hier eine zweite Dichtscheibe **66** angeordnet. Die zweite Dichtscheibe 66 kann mit einer radial innen liegenden Tragscheibe (nicht im Detail dargestellt) und einem radial außen liegenden umlaufenden Dichtkörper aus einem Elastomer ausgebildet sein, wobei der Dichtkörper im entspannten Zustand einen im Wesentlichen trapezförmigen Querschnitt aufweist, der sich nach radial außen hin in Achsrichtung aufweitet, und der zumindest an seinem radial äußeren Ende dicker ist als die Tragscheibe. Die Tragspindel 12 und die Fußplatte 18 sind hier über eine Schraube **68** verbunden, die in die Tragspindel 12 eingreift.

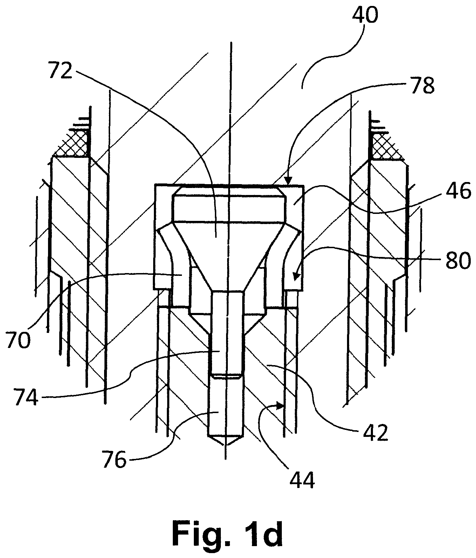

Zur Montage des Stellfußes 10 bietet sich nachfolgend beschriebenes Vorgehen an. Zunächst wird das Sicherungselement 50 in das Hülsenteil 51 eingebracht, hier von oben. Das Sicherungselement 50 kann beispielsweise auf der radialen Verengung 60 abgelegt werden. Sodann wird der Gewindeeinsatz 52 in das Hülsenteil 51 montiert. Das Sicherungselement 50 ist dann in der Lasthülse 14 gefangen. Anschließend wird das Schaftteil 38 von unten an dem Dichtelement 30 vorbei in die Lasthülse 14 eingeführt. Dabei wird auch das Sicherungselement 50 an dem Halsabschnitt 48 angeordnet. Daraufhin wird ein Spreizkonus in einen noch ungespreizten Kronenabschnitt des Gewindezapfens 42 eingelegt, vgl. Fig. 1d, dortige Bezugszeichen 70 (Kronenabschnitt) und 72 (Spreizkonus). Abschließend wird das Gewindeteil 40 in den Innengewindeabschnitt 54 der Lasthülse 14 eingeschraubt und das Gegengewinde 44 des Gewindeteils 40 wird auf den Gewindezapfen 42 des Schaftteils 32 aufgeschraubt, wobei der Spreizkonus den Kronenabschnitt aufspreizt.

**Figur 1d** zeigt einen vergrößerten Ausschnitt von Fig. 1c (vgl. dort Markierungskreis Id) im Bereich der Verschraubung des Gewindezapfens 42 des Schaftteils mit dem Gewindeteil 40. In dem Gewindeteil 40 ist die Aufnahmeausnehmung 46 mit dem Gegengewinde 44 ausgebildet, in das der Gewindezapfen 42 eingreift. Oberseitig an dem Gewindezapfen 42 ist ein Kronenabschnitt **70** ausgebildet. Der Kronenabschnitt 70 wird von einem Spreizkonus **72** aufgespreizt. Zur Führung des Spreizkonus 72 weist dieser einen Fortsatz **74** auf, der in eine Bohrung **76** in dem Gewindezapfen 42 eingreift.

Zur Montage der Tragspindel 12 wird zunächst der Spreizkonus 72 in den noch ungespreizten Kronenabschnitt 70 des Schaftteils 38 eingesetzt. Sodann wird das Gewindeteil 40 auf das Schaftteil 38 montiert. Beim Einschrauben des Gewindezapfens 42 in das Gegengewinde 44 der Aufnahmeausnehmung 46 drückt dabei eine Endfläche **78** der Aufnahmeausnehmung 46 den Spreizkonus 72 in den Kronenabschnitt 70, so dass der Kronenabschnitt 70 unter plastischer Verformung aufgespreizt wird. Die Aufnahmeausnehmung 46 weist jenseits des Gegengewindes 44 eine Hinterschneidung **80** auf. Der aufgespreizte Kronenabschnitt 70 greift in die Hinterschneidung 80 ein. Ein Abschrauben des Gewindeteils 40 von dem Gewindezapfen 42 wird somit verhindert, da das Gegengewinde 44 nicht an dem aufgespreizten Kronenabschnitt 70 vorbeigeführt werden kann und der Spreizkonus 72 ein Zurückverformen des Kronenabschnitts 70 unterbindet.

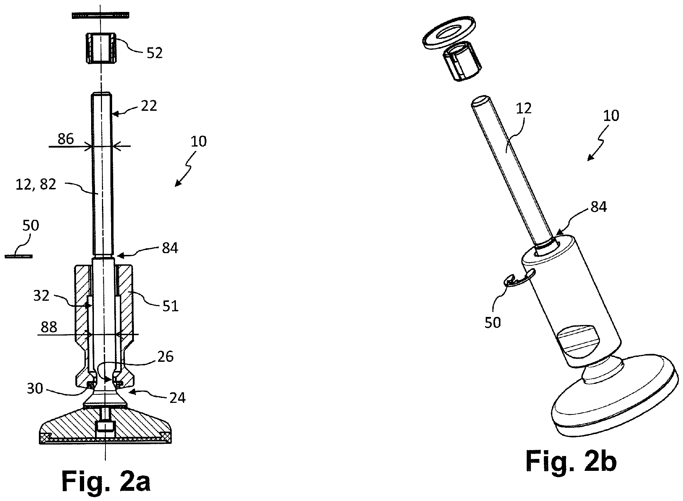

**Figur 2a** zeigt eine schematische Schnittdarstellung einer zweiten Ausführungsform eines erfindungsgemäßen Stellfußes 10. Der Stellfuß 10 weist eine ungeteilte Tragspindel 12 auf, bei der an einem gemeinsamen Bauteil **82** sowohl der Zylinderschaftabschnitt 32 als auch der Außengewindeabschnitt 22 ausgebildet sind. Zwischen dem Außengewindeabschnitt 22 und dem Zylinderschaftabschnitt 32 weist die Tragspindel 12 einen verjüngten Halsabschnitt **84** auf. An dem Halsabschnitt 84 ist ein Sicherungselement 50 anordenbar.

Zur Montage des Sicherungselements 50 an dem Halsabschnitt 84 kann ein Hülsenteil 51 einer Lasthülse 14 so weit auf der Tragspindel 12 nach unten geschoben werden, dass der Halsabschnitt 84 oberhalb des Hülsenteils 51 freiliegt. Ein Dichtelement 30 der Lasthülse 14 kann dazu temporär im Bereich eines Montageabschnitts 24 der Tragspindel 12 angeordnet werden. Eine erste Schlüsselfläche 26 an dem Montageabschnitt 24 ist hier mit abgerundeten Übergängen ausgebildet, um Beschädigungen des Dichtelements 30 zu vermeiden und um die Reinigung des Stellfußes 10 zu erleichtern.

Die Lasthülse 14 ist hier mehrteilig mit dem Hülsenteil 51 und einem Gewindeeinsatz 52 ausgeführt. Da ein Außengewindeaußendurchmesser **86** des Außengewindeabschnitts 22 kleiner ist als ein Schaftaußendurchmesser **88** des Zylinderschaftabschnitts 32, kann das Hülsenteil 51 mit dem dichtungsseitigen Ende voran problemlos auf die Tragspindel 12 aufgeschoben werden. Das Hülsenteil 51 mit dem Dichtelement 30 kann über den Außengewindeabschnitt 22 geschoben werden, ohne dass das Dichtelement 30 durch den Außengewindeabschnitt 22 merklich aufgeweitet oder sonst strapaziert wird. Der Zylinderschaftabschnitt 32 ist vorzugsweise unterhalb des Halsabschnitts 84 abgeschrägt oder abgerundet, um ein Aufgleiten des Dichtelements 30 bei der Montage zu erleichtern und Beschädigungen des Dichtelements 30 zu vermeiden.

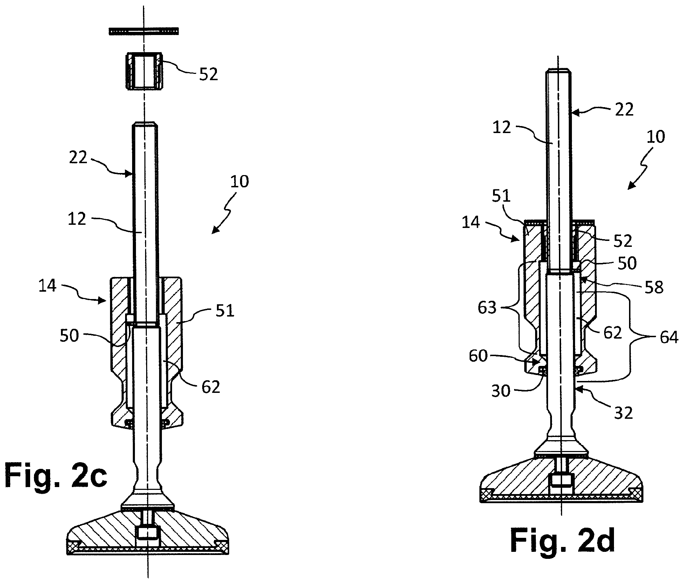

**Figur 2b** zeigt eine schematische, perspektivische Darstellung des teilmontierten Stellfußes 10 von Fig. 2a. Das Sicherungselement 50 ist als eine im Wesentlichen C-förmige Sicherungsscheibe, hier gemäß DIN 6799, ausgeführt. Das Sicherungselement 50 kann, unter vorübergehender elastischer Aufweitung, in radialer Richtung auf den Halsabschnitt 84 aufgeklipst werden. Das montierte Sicherungselement 50 (vgl. Fign. 2c, d) umgreift den Halsabschnitt dann an mehr als 50 % seines Umfangs, so dass es an der Tragspindel 12 gehalten ist.

**Figur 2c** zeigt den Stellfuß 10 von Fig. 2a mit dem montierten Sicherungselement 50 in einer schematischen Schnittdarstellung. Das Hülsenteil 51 wurde nun an der Tragspindel 12 so weit nach oben geschoben, dass das Sicherungselement 50 in einer durchgehenden Längsausnehmung 62 der Lasthülse 14 angeordnet ist.

In einem nächsten Schritt kann der Gewindeeinsatz 52 auf den Außengewindeabschnitt 22 der Tragspindel 12 und in das Hülsenteil 51 montiert werden.

In **Figur 2d** ist der Stellfuß 10 von Fig. 2a im fertig montierten Zustand in einer schematischen Schnittdarstellung gezeigt. Der Gewindeeinsatz 52 wurde auf den Außengewindeabschnitt 22 aufgeschraubt und in das Hülsenteil 51 eingeschraubt. Durch den Gewindeeinsatz 52 oberenends und eine radiale Verengung 60 unterenends an dem Hülsenteil 51 wird ein mittlerer Bereich 63 der durchgehenden Längsausnehmung 62 abgegrenzt. Das Sicherungselement 50 greift in den mittleren Bereich 63 ein und wirkt somit als Teil einer Anschlagmechanik 58. Durch die Anschlagmechanik 58 wird ein Verstellbereich 64 der Lasthülse 14 relativ zu der Tragspindel 12 derart begrenzt, dass das Dichtelement 30 nur auf einem Zylinderschaftabschnitt 32 der Tragspindel 12 verfahren werden kann.

Der Außengewindeabschnitt 22 der Tragspindel 12 ist hier bis oben durchgehend und freiliegend ausgeführt. Es können somit bei Bedarf oberhalb der Lasthülse 14 noch weitere Bauteile (nicht dargestellt) auf die Tragspindel 12 des Stellfußes 10 aufgeschraubt werden.

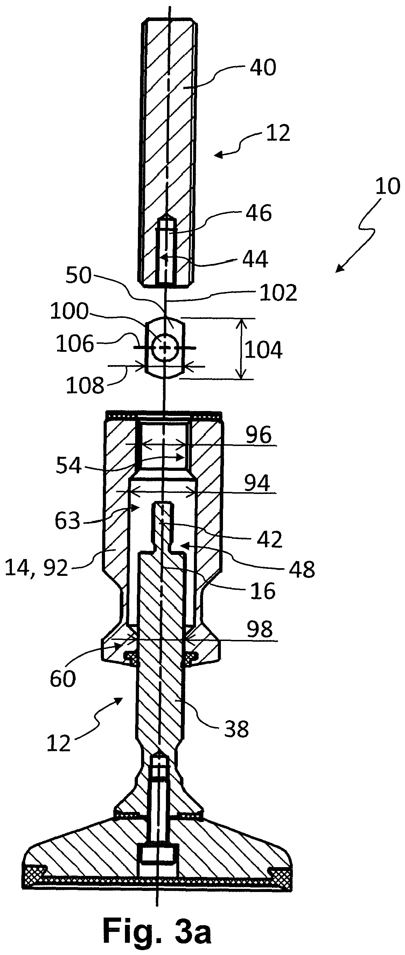

**Figur 3a** zeigt eine schematische Schnittdarstellung einer dritten Ausführungsform eines erfindungsgemäßen Stellfußes 10 in einem teilmontierten Zustand. Der Stellfuß 10 weist eine mehrteilige Tragspindel 12 mit einem Schaftteil 38 und einem Gewindeteil 40 auf. Das Schaftteil 38 weist einen Gewindezapfen 42 auf, der in ein Gegengewinde 44 einer Aufnahmeausnehmung 46 des Gewindeteils 40 einschraubbar ist. Unterenends an dem Gewindezapfen 42 ist ein verjüngter Halsabschnitt 48 der Tragspindel 12 zur Aufnahme eines Sicherungselements 50 ausgebildet.

Eine Lasthülse 14 ist hier ungeteilt ausgeführt, d.h. ein Innengewindeabschnitt 54 und eine radiale Verengung 60 sind an einem gemeinsamen Bauteil **92** ausgebildet. Ein Durchmesser **94** eines mittleren Bereichs 63 der Lasthülse 14 ist größer als ein Innengewindeinnendurchmesser **96** des Innengewindeabschnitts 54 und als ein Innendurchmesser **98** der radialen Verengung 60.

Das Sicherungselement 50 weist eine Ausnehmung **100** auf, die hier zentral an dem Sicherungselement 50 ausgebildet ist. Das Sicherungselement 50 ist hier als eine seitlich abgeflachte Ringscheibe ausgeführt. Das Sicherungselement 50 weist in einer ersten Richtung **102** eine maximale Ausdehnung **104** auf. In einer zweiten Richtung **106** weist das Sicherungselement 50 eine Querbreite **108** auf. Die erste Richtung 102 und die zweite Richtung 106 sind hier orthogonal zueinander ausgerichtet.

Die maximale Ausdehnung 104 ist größer als die Querbreite 108. Die maximale Ausdehnung 104 ist ferner größer als der Innengewindeinnendurchmesser 96 und als der Innendurchmesser 98 der radialen Verengung 60. Die maximale Ausdehnung 104 ist jedoch kleiner als der Durchmesser 94 des mittleren Bereichs 63.

Die Querbreite 108 ist hier kleiner als der Innengewindeinnendurchmesser 96 oder auch als der Innendurchmesser 98 der radialen Verengung 60. Es wird dadurch ermöglicht, das Sicherungselement 50 in die Lasthülse 14 einzuführen. Das Sicherungselement 50 kann dazu beispielsweise wie in Fig. 3a gezeigt ausgerichtet werden, wobei die zweite Richtung 106 senkrecht zu einer axialen Richtung 16 des Stellfußes 10 steht und die erste Richtung 102 mit der axialen Richtung 16 zusammenfällt.

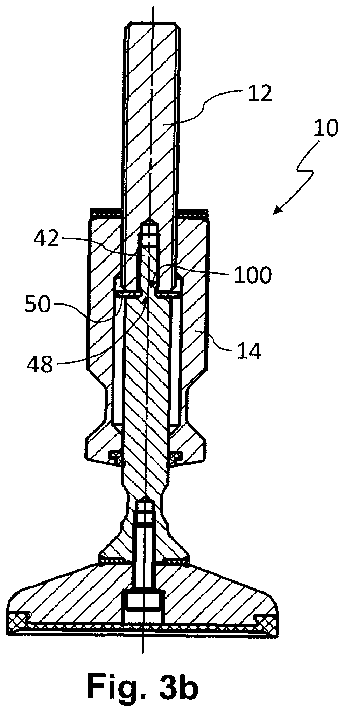

**Figur 3b** zeigt den Stellfuß 10 von Fig. 3a im fertig montierten Zustand in einer schematischen Schnittdarstellung. Das Sicherungselement 50 wurde wie oben beschrieben in die Lasthülse 14 eingeführt. Sodann wurde das Sicherungselement 50 gedreht und der Gewindezapfen 42 durch die Ausnehmung 100 des Sicherungselements 50 geschoben. Das Sicherungselement 50 umgreift somit den Halsabschnitt 48 der Tragspindel 12.

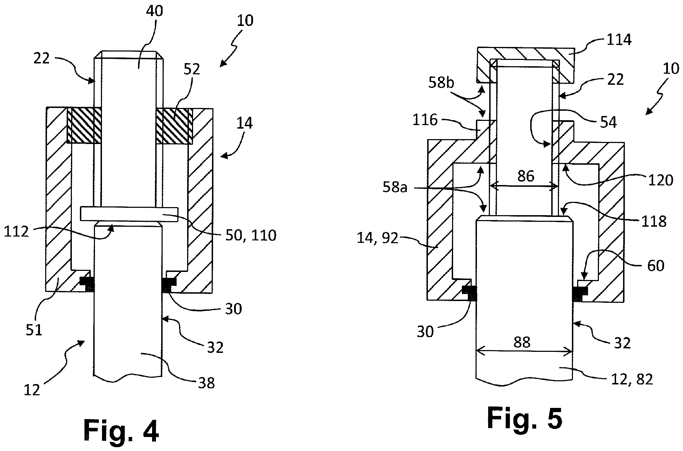

**Figur 4** zeigt eine stark abstrahierte Schnittdarstellung einer vierten Ausführungsform eines erfindungsgemäßen Stellfußes 10. Eine Tragspindel 12 (unterenends abgeschnitten dargestellt) des Stellfußes 10 ist hier mehrteilig mit einem Schaftteil 38 und einem Gewindeteil 40 ausgeführt. Eine Lasthülse 14 ist ebenfalls mehrteilig mit einem Hülsenteil 51 und einem Gewindeeinsatz 52 ausgeführt. In Fig. 4 ist der montierte Zustand des Stellfußes 10 dargestellt.

Ein Sicherungselement 50 ist hier als eine Auskragung **110** in der Form eines umlaufenden Bundes unterenends an dem Gewindeteil 40 der Tragspindel 12 ausgebildet. Das Schaftteil 38 und das Gewindeteil 40 können wie oben beschrieben miteinander verschraubt sein.

Zur Montage des Stellfußes 10 wird zunächst das Schaftteil 38 in das dichtungsseitige Ende des Hülsenteils 51 eingeführt. Um das Aufgleiten eines Dichtelements 30 auf einen Zylinderschaftabschnitt 32 des Schaftteils 38 zu erleichtern, kann das Schaftteil 38 oberenends mit einer Einführschräge **112** ausgebildet sein. Sodann wird das Gewindeteil 40 von oben in das Hülsenteil 51 eingeführt und mit dem Schaftteil 38 verbunden. Abschließend kann der Gewindeeinsatz 52 auf einen Außengewindeabschnitt 22 des Gewindeteils 40 aufgeschraubt und in das Hülsenteil 51 montiert werden.

**Figur 5** zeigt eine stark abstrahierte Schnittdarstellung einer fünften Ausführungsform eines erfindungsgemäßen Stellfußes 10. Eine Tragspindel 12 (unterenends abgeschnitten dargestellt) des Stellfußes 10 umfasst hier ein gemeinsames Bauteil 82, an dem ein Außengewindeabschnitt 22 und ein Zylinderschaftabschnitt 32 ausgebildet sind. Ein Schaftaußendurchmesser 88 des Zylinderschaftabschnitts 32 ist dabei größer als ein Außengewindeaußendurchmesser 86 des Außengewindeabschnitts 22.

Eine Lasthülse 14 ist als ein gemeinsames Bauteil 92 ausgeführt, an dem eine radiale Verengung 60 und ein Innengewindeabschnitt 54 ausgebildet sind. Im Bereich der radialen Verengung 60 ist ein Dichtelement 30 an der Lasthülse 14 gehalten, und liegt abdichtend an dem Zylinderschaftabschnitt 32 an.

Oberenends ist eine Anschlagkappe **114** auf die Tragspindel 12 aufgesetzt, hier aufgeschraubt. Die Lasthülse 14 kann oberseitig eine, hier zylindrische, Ausziehung **116** aufweisen. Die Ausziehung 116 ist hier durchmessergleich mit der Anschlagkappe 114 ausgeführt, um die radiale Führung einer abzustützenden Maschine oder Anlage (nicht dargestellt) auf dem Stellfuß 10 zu verbessern, bzw. um den Stellfuß 10 in einer Bohrung der Maschine oder Anlage zu zentrieren.

Die Anschlagkappe 114 bildet zusammen mit der Außziehung 116 einen oberen Anschlag 58b für die Lasthülse 14. Ein unterer Anschlag 58a für die Lasthülse 14 wird durch einen Absatz **118** zwischen dem Außengewindeabschnitt 22 und dem Zylinderschaftabschnitt 32 der Tragspindel 12 sowie eine Unterseite **120** im Bereich des Innengewindeabschnitts 54 der Lasthülse 14 definiert.

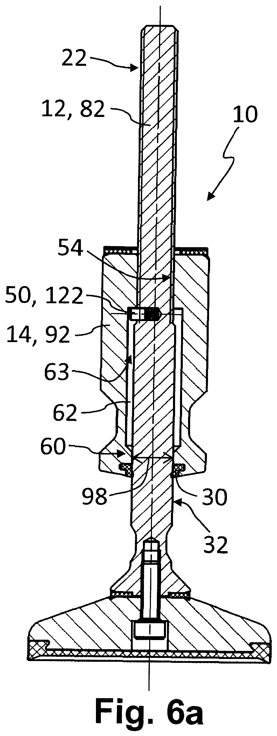

**Figur 6a** zeigt eine sechste Ausführungsform eines erfindungsgemäßen Stellfußes 10. Der Stellfuß 10 umfasst eine Tragspindel 12, die an einem gemeinsamen Bauteil 82 einen Zylinderschaftabschnitt 32 und einen Außengewindeabschnitt 22 aufweist. Eine Lasthülse 14 des Stellfußes 10 weist an einem gemeinsamen Bauteil 92 einen Innengewindeabschnitt 54 und eine radiale Verengung 60 auf. Zwischen der radialen Verengung 60 und dem Innengewindeabschnitt 54 erstreckt sich ein durchmessergrößerer mittlerer Bereich 63 einer durchgehenden Längsausnehmung 62 in der Lasthülse 14.

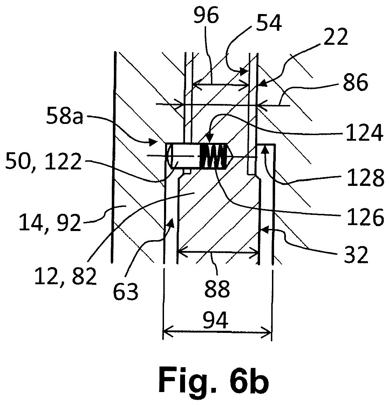

Aus der Tragspindel 12 ragt ein Bolzen **122** aus. Eine Umgebung des Bolzens 122 ist in der **Figur 6b** vergrößert dargestellt. Die Fign. 6a, 6b werden im Folgenden gemeinsam beschrieben. Der Bolzen 122 greift in den mittleren Bereich 63 ein. Mit anderen Worten hintergreift der Bolzen 122 den Innengewindeabschnitt 54 und die radiale Verengung 60. Dadurch wird ein Verstellbereich der Lasthülse 14 begrenzt. Der Bolzen fungiert somit als ein Sicherungselement 50.

Der Bolzen 122 ist in einer Bolzenausnehmung **124** gelagert. Die Bolzenausnehmung 124 ist als ein Sackloch ausgebildet. Die Bolzenausnehmung 124 ist hier in einem unteren Endbereich des Außengewindeabschnitts 22 knapp oberhalb des Zylinderschaftabschnitts 32 angeordnet. Hinter dem Bolzen 122 ist in der Bolzenausnehmung 124 eine Feder **126** angeordnet. Die Feder 126 kann als eine, insbesondere zylindrische, Schraubenfeder ausgeführt sein. Die Feder 126 drückt den Bolzen 122 nach radial außen aus der Tragspindel 12 heraus. Dadurch wird sichergestellt, dass der Bolzen 122 nicht in die Bolzenausnehmung 124 zurückrutscht.

Der Bolzen 122 ragt über einen Außengewindeaußendurchmesser 86 und einen Schaftaußendurchmesser 88 aus der Tragspindel 12 hinaus. Der Schaftaußendurchmesser 88 ist hier größer als der Außengewindeaußendurchmesser 86, so dass die Lasthülse 14 einfach von oben auf die Tragspindel 12 montiert werden kann. Der Bolzen 122 ragt auch über einen Innengewindeinnendurchmesser 96 des Innengewindeabschnitts 54 und einen Innendurchmesser 98 der radialen Verengung 60 hinaus.

In der dargestellten Konfiguration wirkt der Bolzen 122 zusammen mit einem Rücksprung **128** von dem Innengewindeabschnitt 54 auf einen Durchmesser 94 des mittleren Bereichs 63 als ein unterer Anschlag 58a für die Lasthülse 14. Zusammen mit der radialen Verengung 60 kann der Bolzen 122 als ein oberer Anschlag für die Lasthülse 14 wirken.

Zur Montage des Stellfußes 10 wird die Tragspindel 12 von unten in ein dichtungsseitiges Ende der Lasthülse 14 eingeführt. Um den Bolzen 122 in dem mittleren Bereich 63 der Längsausnehmung 62 anordnen zu können, wird dieser zunächst derart in die Bolzenausnehmung 124 eingesetzt und gegen die Kraft der Feder 126 zurückgedrückt, so dass er nicht oder allenfalls geringfügig aus der Tragspindel 12 herausragt, d.h. nicht oder jedenfalls nicht wesentlich über den Schaftaußendurchmesser 88 hinaus. Der Bolzen 122 wird in dieser Position gehalten und kann somit an einem Dichtelement 30 und der radialen Verengung 60 vorbei in die Lasthülse 14 vorgeschoben werden. Nach Passieren der radialen Verengung 60 wird der Bolzen 122 durch die Feder 126 ausgerückt, so dass er über den Schaftaußendurchmesser 88 hinausragt und in den mittleren Bereich 63 eingreift.

### Bezugszeichen

Stellfuß **10**
Tragspindel **12**
Lasthülse **14**
axiale Richtung **16**
Fußplatte **18**
Belag **20**
Außengewindeabschnitt **22**
Montageabschnitt **24**
erste Schlüsselfläche **26**
zweite Schlüsselfläche **28**
Dichtelement **30**
Zylinderschaftabschnitt **32**
erste Dichtscheibe **34**
dritte Schlüsselfläche **36**
Schaftteil **38**
Gewindeteil **40**
Gewindezapfen **42**
Gegengewinde **44**
Aufnahmeausnehmung **46**
Halsabschnitt **48**
Sicherungselement **50**
Hülsenteil **51**
Gewindeeinsatz **52**
Innengewindeabschnitt **54**
Keile **56**
Anschlagmechanik **58**
unteren Anschlag **58a**
oberer Anschlag **58b**
radiale Verengung **60**
Dichtungssitz **61**
Längsausnehmung **62**
mittlerer Bereich **63**
Verstellbereich **64**
Dichtscheibe **66**
Schraube **68**
Kronenabschnitt **70**
Spreizkonus **72**
Fortsatz **74**
Bohrung **76**
Endfläche **78**
Hinterschneidung **80**
gemeinsames Bauteil **82** der Tragspindel
Halsabschnitt **84**
Außengewindeaußendurchmesser **86**
Schaftaußendurchmesser **88**
gemeinsames Bauteil **92** der Lasthülse
Durchmesser **94** des mittleren Bereichs
Innengewindeinnendurchmesser **96**
Innendurchmesser **98** der radialen Verengung
Ausnehmung **100**
ersten Richtung **102**
maximale Ausdehnung **104**
zweiten Richtung **106**
Querbreite **108**
Auskragung **110**
Einführschräge **112**
Anschlagkappe **114**
Ausziehung **116**
Absatz **118**
Unterseite **120**
Bolzen **122**
Bolzenausnehmung **124**
**Feder 126**
Rücksprung **128**

## Patentansprüche

1. Stellfuß (10), insbesondere für Hygieneanwendungen, umfassend
- eine Lasthülse (14) mit einer durchgehenden Längsausnehmung (62) und
- eine Tragspindel (12), zum Durchragen der Lasthülse (14) in axialer Richtung (16),
wobei die Tragspindel (12) oberenends einen Außengewindeabschnitt (22), unterenends einen Montageabschnitt (24) und dazwischen einen gewindefreien Zylinderschaftabschnitt (32) aufweist,
wobei an der Lasthülse (14) ein Dichtelement (30) zur Abdichtung der Lasthülse (14) gegen den Zylinderschaftabschnitt (32) angeordnet ist, und
wobei die Lasthülse (14) in der Längsausnehmung (62) einen Innengewindeabschnitt (54) aufweist zum Zusammenwirken mit dem Außengewindeabschnitt (22) der Tragspindel (12), um die Lasthülse (14) gegen die Tragspindel (12) abzustützen und um die Lasthülse (14) in ihrer axialen Position an der Tragspindel (12) verstellen zu können,
**dadurch gekennzeichnet,**
**dass** eine Anschlagmechanik (58) vorgesehen ist, die einen unteren Anschlag (58a) und einen oberen Anschlag (58b) ausbildet, so dass ein Verstellbereich (64) der Lasthülse (14) derart begrenzt ist, dass das Dichtelement (30) nur auf dem Zylinderschaftabschnitt (32) verfahrbar ist.

2. Stellfuß (10) nach Anspruch 1, **dadurch gekennzeichnet,**
**dass** die Längsausnehmung (62) der Lasthülse (14) einen mittleren Bereich (63) aufweist, wobei ein Durchmesser (94) des mittleren Bereichs (63) größer ist als ein Innengewindeinnendurchmesser (96) des Innengewindeabschnitts (54) und als ein Innendurchmesser (98) einer radialen Verengung (60), die von dem Innengewindeabschnitt (54) axial beabstandet in der Längsausnehmung (62) ausgebildet ist,
**dass** die Anschlagmechanik (58) ein Sicherungselement (50) umfasst, dass die Tragspindel (12) zwischen dem Zylinderschaftabschnitt (32) und dem Außengewindeabschnitt (22) das Sicherungselement (50) aufweist, das in den mittleren Bereich (63) der Längsausnehmung (62) eingreift, wobei das Sicherungselement (50) radial über den Innengewindeinnendurchmesser (96) und den Innendurchmesser (98) der Verengung (60) hinaus aus der Tragspindel (12) ausragt, und
**dass** das Sicherungselement (50) den Verstellbereich (64) der Lasthülse (14) derart begrenzt, dass das Dichtelement (30) nur auf dem Zylinderschaftabschnitt (32) verfahrbar ist.

3. Stellfuß (10) nach Anspruch 1 oder 2, **dadurch gekennzeichnet, dass** die Tragspindel (12) mehrteilig mit einem Schaftteil (38), an dem der Zylinderschaftabschnitt (32) ausgebildet ist, und mit einem Gewindeteil (40), das den Außengewindeabschnitt (22) trägt, ausgebildet ist.

4. Stellfuß (10) nach Anspruch 3, **dadurch gekennzeichnet, dass** das Gewindeteil (40) und das Schaftteil (38) über einen Gewindezapfen (42) und eine Aufnahmeausnehmung (46) mit einem Gegengewinde (44) für den Gewindezapfen (42) verbunden sind.

5. Stellfuß (10) nach Anspruch 4, **dadurch gekennzeichnet, dass** der Gewindezapfen (42) einen aufgespreizten Kronenabschnitt (70) aufweist.

6. Stellfuß (10) nach Anspruch 5, **dadurch gekennzeichnet, dass** die Aufnahmeausnehmung (46) eine Hinterschneidung (80) zum Eingreifen des aufgespreizten Kronenabschnitts (70) aufweist.

7. Stellfuß (10) nach Anspruch 5 oder 6, **dadurch gekennzeichnet, dass** ein Spreizkonus (72) für den Kronenabschnitt (70) vorgesehen ist, der durch die Montage des Gewindezapfens (42) in der Aufnahmeausnehmung (46) von einer Endfläche (78) der Aufnahmeausnehmung (46) in den Kronenabschnitt (70) gepresst wurde, so dass dieser aufgespreizt wurde.

8. Stellfuß (10) nach einem der Ansprüche 2 bis 7, **dadurch gekennzeichnet, dass** zwischen dem Außengewindeabschnitt (22) und dem Zylinderschaftabschnitt (32) ein verjüngter Halsabschnitt (48, 84) an der Tragspindel (12) ausgebildet ist, und dass das Sicherungselement (50) eine Ausnehmung (100), insbesondere eine zentrale Ausnehmung, aufweist, die den Halsabschnitt (48, 84) umgreift.

9. Stellfuß (10) nach einem der Ansprüche 3 bis 7, **dadurch gekennzeichnet, dass** das Sicherungselement (50) als eine Auskragung (110), insbesondere als ein umlaufender Bund, an dem Gewindeteil (40) ausgebildet ist.

10. Stellfuß (10) nach Anspruch 2, **dadurch gekennzeichnet, dass** der Zylinderschaftabschnitt (32) und der Außengewindeabschnitt (22) an einem gemeinsamen Bauteil (82) ausgebildet sind, dass zwischen dem Außengewindeabschnitt (22) und dem Zylinderschaftabschnitt (32) ein verjüngter Halsabschnitt (84) an der Tragspindel (12) ausgebildet ist, und dass das Sicherungselement (50) den Halsabschnitt (84) zumindest abschnittsweise umgreift, insbesondere wobei das Sicherungselement (50) im Wesentlichen C-förmig ausgebildet ist und unter elastischer Aufweitung auf den Halsabschnitt (84) aufgeschoben wurde.

11. Stellfuß (10) nach einem der vorhergehenden Ansprüche, **dadurch gekennzeichnet, dass** die Lasthülse (14) mehrteilig mit einem Hülsenteil (51) und einem Gewindeeinsatz (52) ausgebildet ist.

12. Stellfuß (10) nach einem der Ansprüche 3 bis 7 und nach Anspruch 8, **dadurch gekennzeichnet, dass** der Innengewindeabschnitt (54) und die radiale Verengung (60) an einem gemeinsamen Bauteil (92) ausgebildet sind, und dass das Sicherungselement (50) in einer Hauptebene in einer ersten Richtung (102) eine maximale Ausdehnung (104) aufweist, die größer ist als eine Querbreite (108) des Sicherungselements (50) in einer zweiten Richtung (106), insbesondere wobei die zweite Richtung (106) senkrecht zu der ersten Richtung (102) in der Hauptebene verläuft.

13. Stellfuß (10) nach Anspruch 2, **dadurch gekennzeichnet, dass** das Sicherungselement (50) ein Bolzen (122) ist, der radial aus der Tragspindel (12) ausragt.

14. Stellfuß (10) nach einem der Ansprüche 2 bis 13, **dadurch gekennzeichnet, dass** die radiale Verengung (60) in Umfangsrichtung umlaufend ausgebildet ist.

15. Stellfuß (10) nach einem der vorhergehenden Ansprüche, **dadurch gekennzeichnet, dass** das Dichtelement (30) bündig und spaltfrei mit der Lasthülse (14) abschließt und spaltfrei an dem Zylinderschaftabschnitt (32) anliegt.

16. Stellfuß (10) nach einem der vorhergehenden Ansprüche, **dadurch gekennzeichnet, dass** der Montageabschnitt (24) der Tragspindel (12) mit einer Fußplatte (18) verbunden ist, bevorzugt über ein Kugelgelenk.

17. Stellfuß (10) nach einem der vorhergehenden Ansprüche, **dadurch gekennzeichnet, dass** eine außenliegende Oberfläche der Lasthülse (14) und eine Oberfläche des Zylinderschaftabschnitts (32) der Tragspindel (12) sowie eine außenliegende Oberfläche des Montageabschnitts (24) einen Mittenrauwert Ra von höchstens 0,8 µm, bevorzugt höchstens 0,4 µm, besonders bevorzugt höchstens 0,1 µm, aufweisen.

18. Verfahren zur Montage eines Stellfußes (10) nach Anspruch 11 mit den Schritten:
a) Einbringen des Sicherungselements (50) in das Hülsenteil (51) der Lasthülse,
b) Montieren des Gewindeeinsatzes (52) in das Hülsenteil (51).

19. Verfahren nach Anspruch 18 zur Montage eines Stellfußes (10) nach den Ansprüchen 7 und 8, wobei der Gewindezapfen (42) an dem Schaftteil (38) der Tragspindel (12) ausgebildet ist, und wobei die Aufnahmeausnehmung (46) an dem Gewindeteil (40) ausgebildet ist, **dadurch gekennzeichnet, dass** das Verfahren weiterhin die folgenden Schritte umfasst:
c) Einführen des Schaftteils (38) der Tragspindel (12) in das dichtungsseitige Ende der Lasthülse (14) und Durchstecken des Gewindezapfens (42) durch die Ausnehmung (100) des Sicherungselements (50),
d) Einlegen des Spreizkonus (72) in den noch ungespreizten Kronenabschnitt (70) des Gewindezapfens (42) an dem Schaftteil (38),
e) Einschrauben des Außengewindeabschnitts (22) des Gewindeteils (40) der Tragspindel (12) in den Innengewindeabschnitt (54) der Lasthülse (14),
f) Aufschrauben des Gegengewindes (44) in der Aufnahmeausnehmung (46) des Gewindeteils (40) auf den Gewindezapfen (42) des Schaftteils (38) und Festziehen des Gewindeteils (40) gegen das Schaftteil (38), so dass der Kronenabschnitt (70) aufgespreizt wird, insbesondere in eine Hinterschneidung (80) der Aufnahmeausnehmung (46).

20. Verfahren nach Anspruch 18 zur Montage eines Stellfußes (10) nach Anspruch 9, **dadurch gekennzeichnet, dass** vor Schritt b) das Schaftteil (38) in das dichtungsseitige Ende der Lasthülse (14) eingeführt wird und das Gewindeteil (40) mit dem Schaftteil (38) verbunden wird.

21. Verfahren nach Anspruch 18 zur Montage eines Stellfußes (10) nach Anspruch 10, **dadurch gekennzeichnet**,
α) dass vor Schritt a) ein Einführen der Tragspindel (12) in das dichtungsseitige Ende der Lasthülse (14) erfolgt,
β) dass vor Schritt a) das Sicherungselement (50) an dem Halsabschnitt (84) angeordnet wird, und
γ) dass vor oder während Schritt b) ein Aufschrauben des Gewindeeinsatzes (52) auf den Außengewindeabschnitt (22) der Tragspindel (12) erfolgt.

22. Verfahren zur Montage eines Stellfußes (10) nach den Ansprüchen 3 und 12 mit den Schritten:
a') Einbringen des Sicherungselements (50) in den mittleren Bereich (63) der Lasthülse (14), insbesondere wobei das Sicherungselement (50) beim Passieren der radialen Verengung (60) oder des Innengewindeabschnitts (54) verkippt wird,
b') Anordnen des Sicherungselements (50) an dem Halsabschnitt (48) und Verbinden des Gewindeteils (40) mit dem Schaftteil (38).

23. Verfahren zur Montage eines Stellfußes (10) nach Anspruch 13 mit den Schritten:
a") Einrücken des Bolzens (122) in eine Bolzenausnehmung der Tragspindel (12),
b") Einbringen des Bolzens (122) in die Lasthülse (14) durch Vorschieben der Tragspindel (12),
c") Ausrücken des Bolzens (122), so dass dieser radial aus der Tragspindel (12) ausragt und in den mittleren Bereich (63) der Lasthülse (14) eingreift.
